# EUROPÄISCHE PATENTSCHRIFT

(11) **EP 2 077 217 B1**
(45) Veröffentlichungstag und Bekanntmachung des Hinweises auf die Patenterteilung: **20.10.2010**
(21) Anmeldenummer: 07024890.1
(22) Anmeldetag: 01.01.2008
(51) Int. Cl.: B61D 17/20

(54) **Brücke eines Übergangs zwischen zwei gelenkig miteinander verbundenen Fahrzeugen**
Bridge for the intersection of two vehicles with a jointed connection
Pont d'un passage entre deux véhicules liés de manière articulée

(43) Veröffentlichungstag der Anmeldung: 08.07.2009
(73) Patentinhaber: Hübner GmbH, 34123 Kassel (DE)
(72) Erfinder: Bingemann, Rolf, 37284 Waldkappel (DE)
(74) Vertreter: Walther, Walther & Hinz GbR

(56) Entgegenhaltungen:
- EP-A- 0 134 202
- EP-A- 0 181 294
- EP-A- 0 279 245
- EP-A- 0 630 794
- FR-A- 2 596 347

## Beschreibung

Die Erfindung betrifft eine Brücke eines Übergangs zwischen zwei gelenkig miteinander verbundenen Fahrzeugen sowie gelenkig miteinander verbundene Fahrzeuge mit einem Übergang zwischen zwei Fahrzeugen, wobei der Übergang eine Brücke umfasst.

Übergänge der eingangs genannten Art sind bei Bussen und bei Schienenfahrzeugen bekannt. Ein solcher Übergang besteht im Einzelnen aus einer Übergangsbrücke oder einer Übergangsplattform, die von einem Balg, z. B. einem Wellen- oder einem Faltenbalg, umspannt wird. Der Balg weist hierbei eine, entsprechend der Querschnittsform der Fahrzeuge, etwa rechteckige Kontur auf. Die Brücke eines solchen Übergangs ist in den verschiedensten Ausgestaltungen aus dem Stand der Technik bekannt. So ist beispielsweise eine Gliederbrücke bekannt, die einzelne Tritt- und Gleitglieder aufweist, so dass eine solche Brücke in der Lage ist, den beim Betrieb des Fahrzeugs entstehenden Bewegungsformen nachzugeben. Das heißt, eine solche Brücke muss in der Lage sein, den beim Betrieb eines solchen Fahrzeugs auftretenden Wank-, Nick- und Knickbewegungen nachzugeben. Hierzu sind - wie bereits ausgeführt - die einzelnen Glieder der Brücke, nämlich die Gleit- und Trittglieder, insofern in der Lage, als die Gleit- und Trittglieder relativ verschieblich zueinander ineinander und vertikal beweglich gelagert.

Aus der FR 2 596 347 A ist eine Übergangsbrücke zwischen zwei Fahrzeugen bekannt, wobei die Übergangsbrücke ein Mittelteil aufweist, das aus einem gummielastischen Material besteht. Dieses gummielastische Material ist über Dämpfer mit den Plattenelementen eingespannt gehalten. Diese Brückenelemente weisen an ihren dem Fahrzeug zugewandten Enden jeweils eine halbkreisförmige Ausbildung auf, wobei der Wagenkasten selbst einen halbkreisförmigen Boden besitzt.

Darüber hinaus sind Plattformen in Form von Drehscheiben bekannt, wie sie insbesondere bei Gelenkbussen eingesetzt werden. Eine solche Drehscheibe ist im Übergangsbereich zum Fahrzeugteil eines Busses bogenförmig ausgebildet und stützt sich auf dem Gelenk des Fahrzeugs ab.

Ein Gelenkbus der zuvor beschriebenen Art zeichnet sich insbesondere dadurch aus, dass der hintere Wagenteil des Gelenkbusses lediglich eine Achse aufweist. Das heißt, dass der hintere Wagenteil des Gelenkbusses mit seinem Gewicht auf dem Gelenk aufliegt.

Insbesondere bei Schienenfahrzeugen ist es allerdings häufig so, dass jedes Fahrzeug ein Paar von Drehgestellen aufweist, so dass ein solches Fahrzeug bzw. der Teil eines Schienenfahrzeugs jeweils ein eigenständiges Gebilde darstellt.

Derartige Fahrzeuge sind häufig durch Kuppelstangen miteinander verbunden, wobei eine solche Kuppelstange im Bereich eines jeden Fahrzeugteils gelenkig von dem dortigen Fahrzeugteil aufgenommen wird.

Bereits an anderer Stelle wurde der Einsatz von sogenannten Gliederbrücken erwähnt, die sich dadurch auszeichnen, dass diese durch ihre konstruktive Ausbildung in der Lage sind, sämtlichen Fahrbewegungen, bzw. auch Überlagerungen einzelner Fahrbewegungen, nachzugeben. Dies insbesondere deshalb, weil die einzelnen Glieder relativ zueinander in Längsrichtung der Brücke beweglich sind, aber auch deswegen, weil die Brücke als solche insbesondere bei Wankbewegungen, auch aufgrund eines geringen vertikalen Spieles zwischen den einzelnen Gleit- und Trittgliedern, in der Lage ist, den entsprechenden Bewegungen nachgeben zu können.

Eine solche Gliederbrücke ist relativ aufwendig in der Herstellung, so dass der Erfindung die Aufgabe zugrunde liegt, eine Brücke eines Übergangs zwischen zwei gelenkig miteinander verbundenen Fahrzeugen bereit zu stellen, die preiswerter in der Herstellung ist, aber dennoch in der Lage ist, sämtlichen auftretenden Fahrbewegungen, wie Wank- , Nick- und Knickbewegungen bzw. Kombinationen von solchen Bewegungsabläufen, nachgeben zu können, insbesondere dann, wenn der Drehpunkt zwischen den Fahrzeugen nicht fix ist.

Die Aufgabe wird erfindungsgemäß dadurch gelöst, dass die Brücke endseitig jeweils mit dem Boden des jeweiligen Fahrzeugs verbindbar ist, wobei eine Brückenplatte vorgesehen ist, wobei die Brückenplatte zu beiden Enden jeweils mit einer Führungsplatte in Verbindung steht, wobei die Führungsplatte am Fahrzeugboden angeordnet werden kann wobei durch die Führungsplatte in im Einbauzustand horizontaler Richtung die Brückenplatte beweglich, insbesondere drehbeweglich geführt ist, wobei die Brückenplatte und die Führungsplatte im Bereich ihres Übergangs zueinander kreisbogenförmig ausgebildet sind, wobei unter der Brückenplatte zu beiden Enden jeweils eine Tragplatte vorgesehen ist, durch die die Brückenplatte in Längsrichtung des Bodens beweglich geführt ist, wobei die Brückenplatte elastisch nachgiebig ausgebildet ist, wobei die Tragplatte, die an der Führungsplatte befestigt ist, ein in Längsrichtung der Brücke ausgerichtetes Langloch aufweist, wobei das Langloch ein Führungsglied in dem Langloch beweglich aufnimmt.
Die Führungsplatte kann nach einer alternativen Ausführungsform bei gelenkig miteinander verbundenen Fahrzeugen mit einem Übergang mit einer Brücke der Bestandteil des Bodens des Fahrzeugs sein, wobei die Führungsplatte ebenfalls im Bereich des jeweiligen Drehlagers des jeweiligen Fahrzeugs angeordnet ist.

Da bei Kurvenfahrt die Drehachse sich aufgrund der beiden Drehlager der beiden Fahrzeuge nicht mehr genau mittig zwischen den beiden Fahrzeugen befindet, wandert der Drehpunkt, entsprechend der Knickbewegung der Fahrzeuge relativ zueinander, nach außen. Hierbei ändert sich der Abstand vom Mittelpunkt der Brückenplatte zur Führungsplatte. Insofern ist gemäß der erfindungsgemäßen Lehre vorgesehen, dass die Brückenplatte in Längsrichtung des Bodens beweglich geführt ist. D. h., dass die Brückenplatte in Längsrichtung der Brücke nicht starr an der Führungsplatte angelenkt ist, sondern vielmehr nach Art eines Teleskops.

Wie bereits an anderer Stelle erläutert, finden nicht nur Bewegungen in einer Ebene beim Fahren des Fahrzeugs statt, sondern es kann auch zu sogenannten Wankbewegungen kommen, wie sie auftreten, wenn die beiden gelenkig miteinander verbundenen Fahrzeugteile relativ zueinander tordiert werden. Insofern ist vorgesehen, dass die Brückenplatte elastisch nachgiebig ausgebildet ist. Elastisch nachgiebig bedeutet nunmehr nicht, dass die Brückenplatte notwendigerweise aus einem elastisch nachgiebigen Kunststoff ausgebildet sein muss; es hat sich vielmehr in diesem Zusammenhang herausgestellt, dass selbst eine Brückenplatte aus Aluminium in Form eines Bleches durchaus in der Lage ist, sich in den erforderlichen Bereichen elastisch zu verformen, ohne plastisch verformt zu werden. Der Grad der möglichen Verformung hängt hierbei zum einen von der Breite der Brücke ab, aber auch von der Stärke des Bleches.

Vorteilhaft an der erfindungsgemäßen Konstruktion ist, dass die Brücke extrem flach baut, was diese insbesondere für den Einsatz in Niederflurfahrzeugen geeignet erscheinen lässt.

Weitere vorteilhafte Merkmale ergeben sich aus den Unteransprüchen.

So ist insbesondere vorgesehen, dass die Tragplatte ortsfest an dem Fahrzeug, und hier insbesondere an der Führungsplatte, befestigt ist. Die Führungsplatte selbst ist hierbei am Fahrzeugboden angeordnet bzw. Bestandteil des Fahrzeugbodens.

Zur Erzeugung der zuvor beschriebenen Auszugsbewegung der Brückenplatte relativ zu den Führungsplatten zu beiden Seiten der Brückenplatte ist im Einzelnen insbesondere vorgesehen, dass die Tragplatte ein in Längsrichtung der Brücke ausgerichtetes Langloch aufweist, wobei das Langloch ein Führungsglied in dem Langloch beweglich aufnimmt. Das Führungsglied ist hierbei beispielsweise als Führungsrolle oder als Führungsstift ausgebildet und ist auf der Unterseite der Brückenplatte angeordnet.

Wie bereits an anderer Stelle ausgeführt, kann bei auftretenden Wankbewegungen die erforderliche Verformung allein durch die Brückenplatte zur Verfügung gestellt werden. In diesem Zusammenhang ist insbesondere vorgesehen, dass die Brücke im Bereich der Brückenplatte Niederhalter zur Verbindung mit dem Fahrzeug, hier insbesondere mit dem Portal des Fahrzeugs, aufweist. Das bedeutet, dass durch die Niederhalter der Brückenplatte eine Bewegung aufgezwungen wird, die zu der der beiden Fahrzeugteile korrespondiert.

Wie bereits an anderer Stelle erläutert, ist die Brückenplatte in der Führungsplatte drehbeweglich geführt. Die Führung ist derart, dass sich die Brückenplatte in der Ebene der Brückeplatte relativ zur Führungsplatte verdrehen kann, allerdings in im Einbauzustand vertikaler Richtung gehalten wird. Im Einzelnen ist in diesem Zusammenhang vorgesehen, dass die Führungsplatte zur Führung der Brückenplatte eine im Querschnitt U-förmige schienenartige Aufnahme aufweist.

Wie bereits ebenfalls an anderer Stelle erläutert, findet bei Kurvenfahrt eine Auszugsbewegung zwischen Führungsplatte einerseits und Brückenplatte andererseits statt. Die Begrenzung der Auszugsbewegung erfolgt durch das bereits ebenfalls zuvor erwähnte Langloch, das das Führungsglied beispielsweise in Form einer Führungsrolle oder eines Führungsstiftes aufnimmt. In diesem Zusammenhang ist insbesondere vorgesehen, dass die Breite des Schenkels der schienenförmigen Aufnahme mit der Länge des Langloches korrespondiert, um auf diese Weise eine Spaltbildung in der Brücke zu verhindern. Das bedeutet, dass das, was durch die U-förmige Aufnahme an Überdeckung bereitgestellt wird, in etwa der Länge des Langloches entspricht.

Der Übergang umfasst einen Balg, wobei der Balg, der einen Mittelrahmen aufweist, vorteilhaft etwa mittig an der Brückenplatte befestigt ist. Durch eine horizontale Lagerung des Mittelrahmens des Balges an der Brückenplatte wird eine Synchronsteuerung und Zentrierung des Balges bewirkt. Um nun zu gewährleisten, dass eine solche Synchronsteuerung und Zentrierung des Balges nicht nur auf der Balgunterseite erfolgt, sondern auch im Dachbereich, ist vorgesehen, dass der Mittelrahmen des Balges im Dachbereich eine Mittelrahmenstabilisierung aufweist, die zu beiden Enden am jeweiligen Fahrzeug angelenkt ist. Eine solche Mittelrahmenstabilisierung ist teleskopartig ausgebildet.

Anhand der Zeichnungen wird die Erfindung nachstehend beispielhaft näher erläutert.
- Fig. 1: zeigt schematisch in dreidimensionaler Darstellung einen Übergang mit Balg und Brücke;
- Fig. 2: zeigt lediglich die Brücke in perspektivischer Darstellung;
- Fig. 3: zeigt eine Ansicht auf die Brücke gemäß Fig. 2, wobei jedoch die Aufnahme für das Drehlager sichtbar ist;
- Fig. 3a: zeigt die U-förmige, schienenartige Aufnahme für die Brückenplatte gemäß dem Schnitt IIIa/IIIa aus Fig. 3;
- Fig. 4: zeigt eine Ansicht von unten auf die Brücke;
- Fig. 5: zeigt eine Ansicht gemäß Fig. 2, jedoch bei Kurvenfahrt;
- Fig. 6: zeigt eine Ansicht von unten auf die Brücke gemäß Fig. 5;
- Fig. 7: zeigt eine Ansicht von oben auf die Brücke bei seitlich versetzten Fahrzeugen;
- Fig. 8: zeigt eine Ansicht von unten auf die Brücke gemäß Fig. 7.

Die insgesamt mit 1 bezeichnete Brücke, oder auch Boden genannt, wird durch den insgesamt mit 10 bezeichneten Balg umgeben. Der Balg 10 besitzt einen Mittelrahmen 11, wobei der Mittelrahmen 11 einerseits in der Mitte der Brückenplatte 2 befestigt ist, und andererseits im Dachbereich eine sogenannten Mittelrahmenstabilisierung 12 zeigt, die nach Art eines Teleskops ausgebildet ist, und an ihren jeweiligen Enden mit dem Dach des Fahrzeugs 7, 8 verbunden ist.

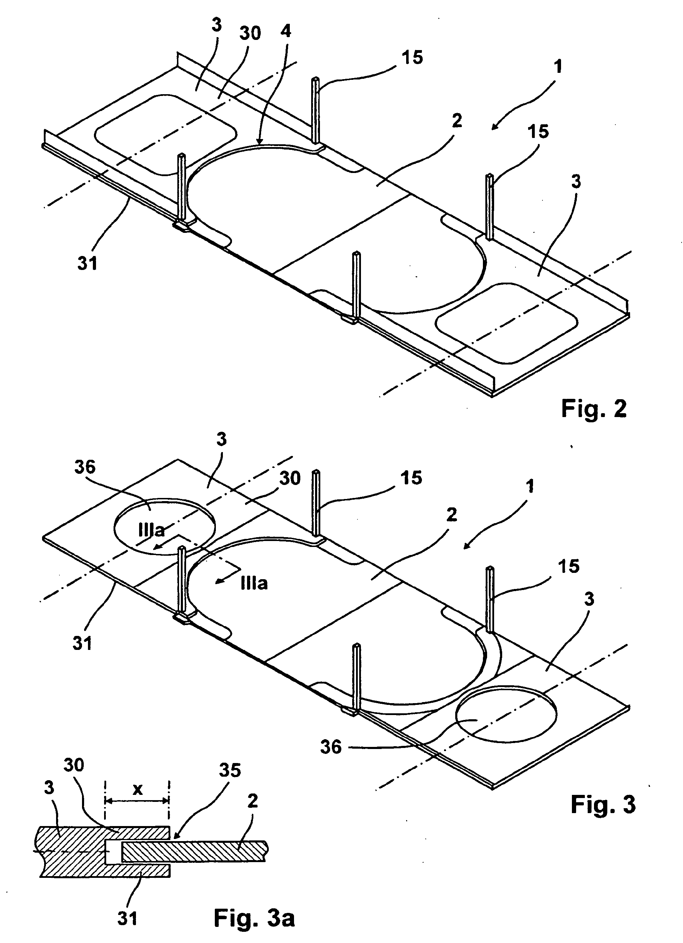

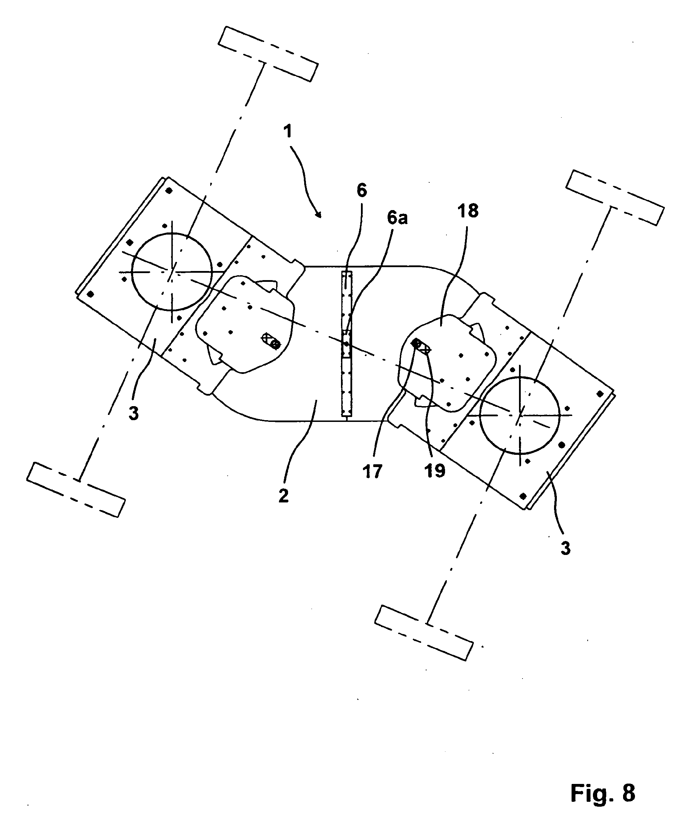

Gegenstand der Erfindung ist nunmehr allerdings die Ausbildung der Brücke, so wie sie sich aus den Figuren 2 bis 8 ergibt.

Die mit 1 bezeichnete Brücke (Fig. 2 ff.) weist die Brückenplatte 2, sowie die zu beiden Seiten der Brückenplatte angeordneten Führungsplatten 3 auf. Die Brückenplatte 2 weist im Bereich des Übergangs zu der Führungsplatte 3 Kreisbogenform (Pfeil 4) auf. Korrespondierend hierzu ist auch die Führungsplatte 3 entsprechend kreisbogenförmig ausgebildet. Die Führungsplatte 3, die Bestandteil des Bodens des Fahrzeugs sein kann, umfasst eine Deckplatte 30 und eine Grundplatte 31. Grundplatte und Deckplatte sind miteinander verschraubt. Im Bereich des Übergangs zur Brückenplatte 2 (Pfeil 4) weist die Führungsplatte eine U-förmige, schienenartige Aufnahme 35 auf, in der die Brückenplatte 2 lagert, wie sich dies in Anschauung der Schnittdarstellung gemäß Fig. 3a ergibt. Aus der Figur 3 ergibt sich eine kreisrunde Öffnung 36 in der Grundplatte 31, die der Aufnahme des Drehlagers des Fahrzeugs dient, das allerdings nicht dargestellt ist.

Erkennbar ist im Übergangsbereich von der Führungsplatte 3 zur Brückenplatte 2 an vier Enden jeweils ein Niederhalter 15 angeordnet. Ein solcher Niederhalter stellt sich als Stütze dar, die mit dem Balgrahmen im Bereich des Portals des Fahrzeugs verbunden ist. Hierdurch wird erreicht, dass die Brückenplatte zwangsläufig der Bewegung der Fahrzeugteile relativ zueinander folgen muss.

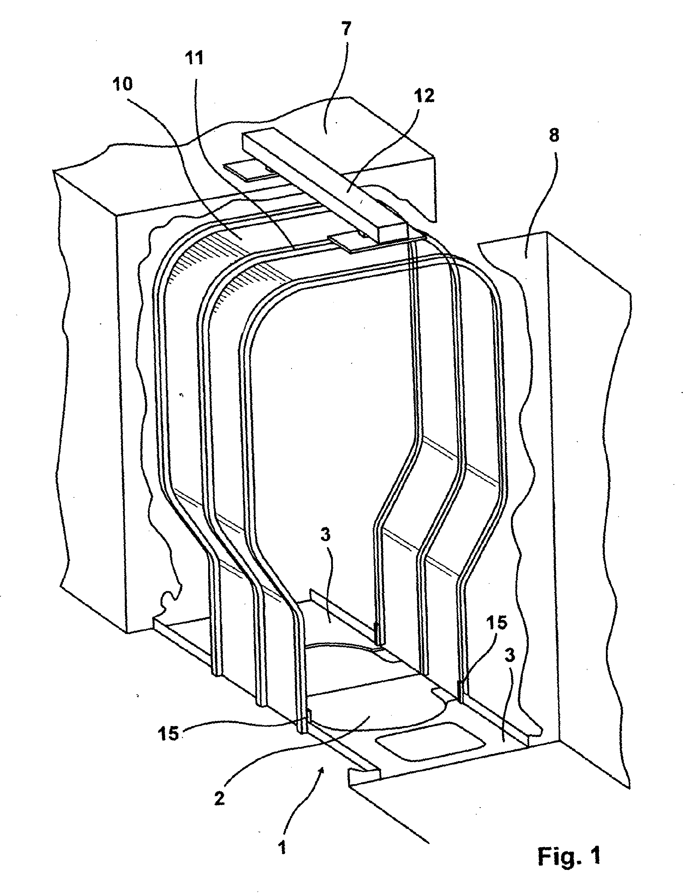

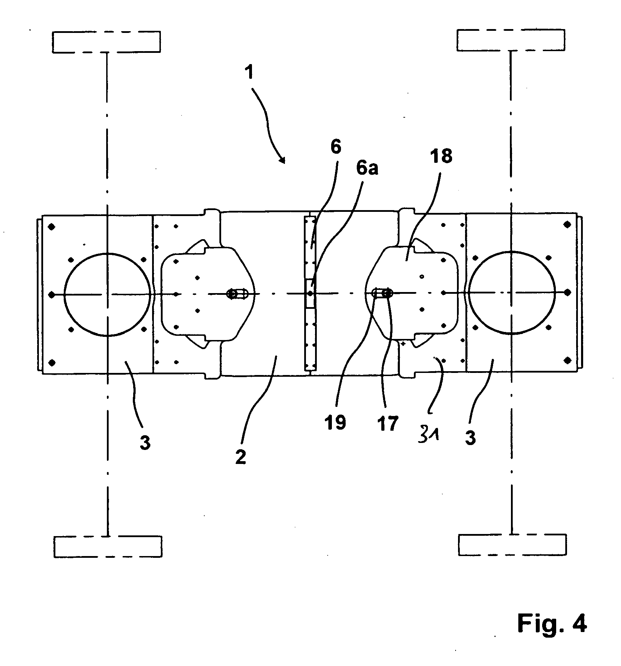

Fig. 4 zeigt nun eine Ansicht von unten auf die Brücke gemäß den Fig. 2 und 3. Erkennbar ist hierbei die mit 18 bezeichnete Tragplatte, die ein Langloch 19 besitzt, wobei in dem Langloch 19 eine Führungsrolle 17 läuft. Die Führungsrolle 17 ist an der Unterseite der Brückenplatte 2 angebracht. Die Länge des Langlochs 19 korrespondiert, wie bereits ausgeführt, mit der Schenkelbreite X der U-förmigen Aufnahme 35 (Fig. 3a). Hierdurch wird erreicht, dass bei Einhaltung der maximal vorgegebenen Kurvenradien eine Spaltbildung in der Brücke nicht entsteht. Die Tragplatte 18 ist an der Grundplatte 31 befestigt, wie sich dies ebenfalls in Anschauung von Fig. 4 ergibt. Mittig an der Brückenplatte 2 befindet sich eine mit 6 bezeichnete Traverse, die mittig ein Lagerklotz 6a zur Aufnahme des Mittelrahmens 11 zeigt (Fig. 1), wie dies ebenfalls bereits zuvor erläutert wurde.

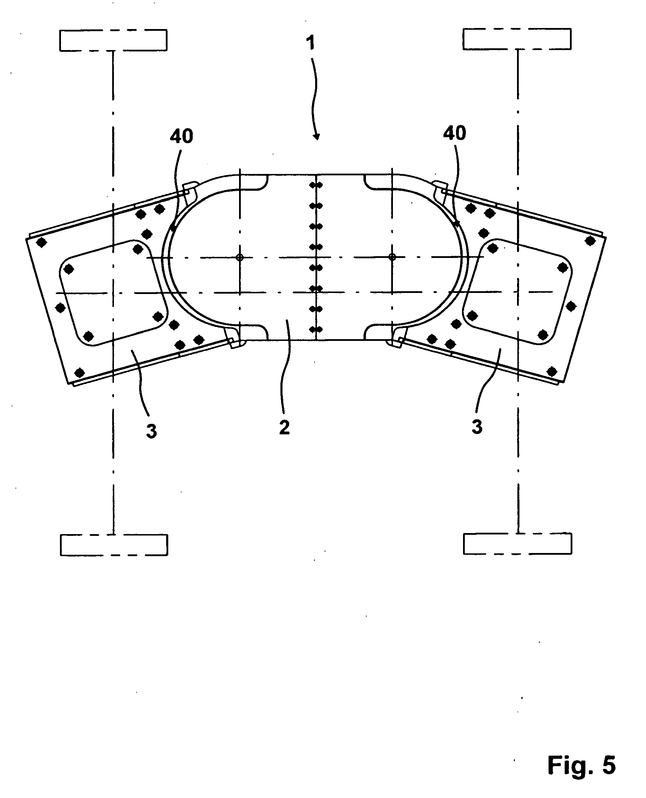

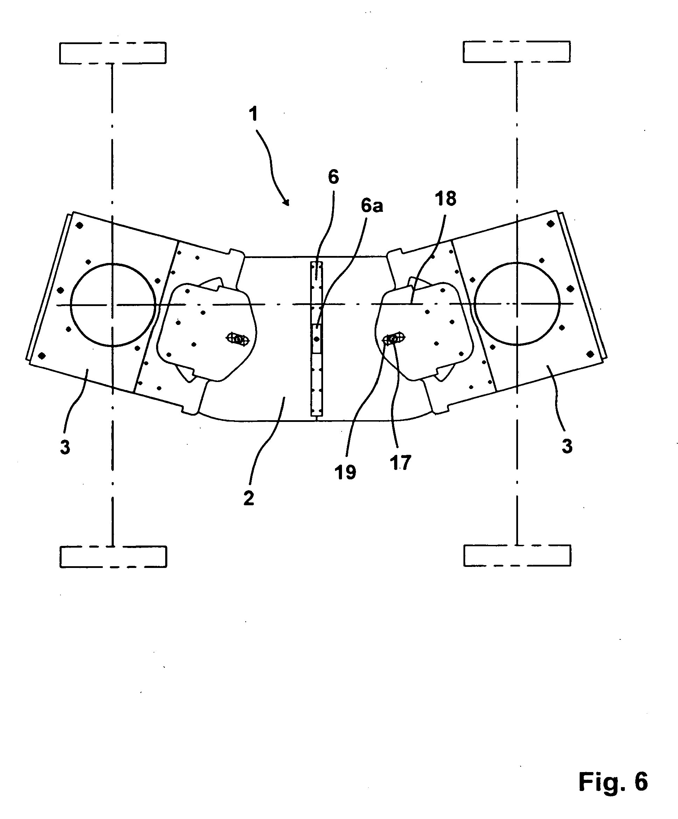

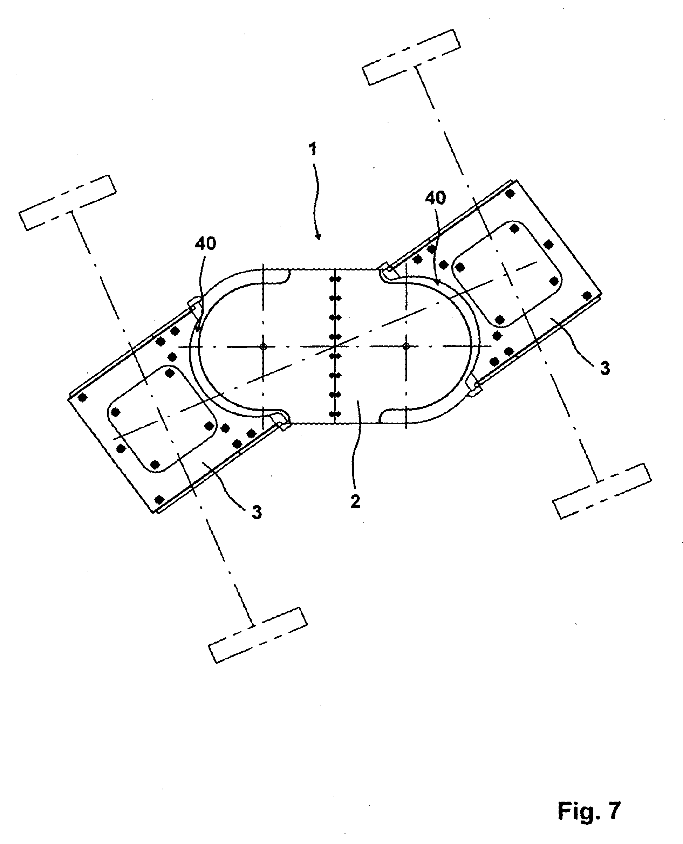

Die Fig. 5 und 6, bzw. auch 7 und 8, zeigen die Gestalt der Brücke in Abhängigkeit einzelner Fahrzustände beim Durchfahren von Kurven. Erkennbar ist hierbei die Auszugsbewegung der Brückenplatte 2 relativ zu den Führungsplatten 3, und die Bewegung der Führungsrolle 17 in dem Langloch 19 in Abhängigkeit von dem Winkel der durchfahrenen Kurve. Der Auszug ist insbesondere erkennbar in Fig. 7 und dort mit den Pfeilen 40 bezeichnet.

## Patentansprüche

1. Brücke (1) eines Übergangs zwischen zwei gelenkig miteinander verbundenen Fahrzeugen, wobei die Brücke (1) endseitig jeweils mit dem Boden des jeweiligen Fahrzeugs verbindbar ist,
wobei eine Brückenplatte (2) vorgesehen ist, wobei die Brückenplatte (2) zu beiden Enden jeweils mit einer Führungsplatte (3) in Verbindung steht,
wobei die Führungsplatte (3) am Fahrzeugboden angeordnet werden kann,
wobei durch die Führungsplatte (3) in im Einbauzustand horizontaler Richtung die Brückenplatte (2) beweglich geführt ist,
wobei die Brückenplatte (2) und die Führungsplatte (3) im Bereich ihres Übergangs zueinander kreisbogenförmig ausgebildet sind,
wobei unter der Brückenplatte (2) zu beiden Enden jeweils eine Tragplatte (18) vorgesehen ist,
durch die die Brückenplatte in Längsrichtung der Brücke (1) beweglich geführt ist,
wobei die Brückenplatte (2) elastisch nachgiebig ausgebildet ist,
wobei die Tragplatte (18), die an der Führungsplatte (3) befestigt ist, ein in Längsrichtung der Brücke (1) ausgerichtetes Langloch (19) aufweist, wobei das Langloch ein Führungsglied (17) in dem Langloch (19) beweglich aufnimmt.

2. Brücke eines Übergangs nach Anspruch 1,
**dadurch gekennzeichnet,**
**dass** die Tragplatte (18) ortsfest an dem Fahrzeug befestigt werden kann.

3. Brücke eines Übergangs nach Anspruch 1,
**dadurch gekennzeichnet,**
**dass** das Führungsglied (17) als Führungsrolle ausgebildet ist.

4. Brücke eines Übergangs nach einem der voranstehenden Ansprüche,
**dadurch gekennzeichnet,**
**dass** die Brücke (1) im Bereich der Brückenplatte (2) Niederhalter (15) zur Verbindung mit dem Fahrzeug (7, 8) aufweist.

5. Brücke eines Übergangs nach Anspruch 4,
**dadurch gekennzeichnet,**
**dass** die Niederhalter (15) an dem Fahrzeug (7, 8) angeordnet werden können.

6. Brücke eines Übergangs nach einem der voranstehenden Ansprüche,
**dadurch gekennzeichnet,**
**dass** die Führungsplatte (3) zur Führung der Brückenplatte (2) eine im Querschnitt U-förmige schienenartige Aufnahme aufweist.

7. Brücke eines Übergangs nach einem der voranstehenden Ansprüche,
**dadurch gekennzeichnet,**
**dass** die Breite X des Schenkels die schienenförmigen Aufnahme (35) mit der Länge des Langlochs (19) korrespondiert.

8. Brücke eines Übergangs nach einem der voranstehenden Ansprüche,
**dadurch gekennzeichnet,**
**dass** der Übergang einen Balg (10) umfasst, wobei der Balg (10) etwa mittig an der Brückenplatte (2) befestigt ist.

9. Brücke eines Übergangs nach Anspruch 8,
**dadurch gekennzeichnet,**
**dass** der Balg (10) einen Mittelrahmen (11) aufweist, der an der Unterseite der Brückenplatte (2) etwa mittig an dieser befestigt ist.

10. Brücke eines Übergangs nach Anspruch 9,
**dadurch gekennzeichnet,**
**dass** der Mittelrahmen (11) im Dachbereich eine Mittelrahmenstabilisierung (12) aufweist.

11. Brücke eines Übergangs nach Anspruch 10,
**dadurch gekennzeichnet,**
**dass** die Mittelrahmenstabilisierung (12) teleskopartig ausgebildet ist.

12. Gelenkig miteinander verbundene Fahrzeuge mit einem Übergang zwischen zwei Fahrzeugen, wobei der Übergang eine Brücke umfasst,
wobei die Brücke (1) endseitig jeweils mit dem Boden des jeweiligen Fahrzeugs verbunden ist, wobei eine Brückenplatte (2) vorgesehen ist, wobei die Brückenplatte (2) zu beiden Enden jeweils mit einer Führungsplatte (3) in Verbindung steht, wobei die Führungsplatte (3) Bestandteil des Fahrzeugbodens ist,
wobei durch die Führungsplatte (3) in im Einbauzustand horizontaler Richtung die Brückenplatte (2) beweglich geführt ist, wobei die Brückenplatte (2) und die Führungsplatte (3) im Bereich ihres Übergangs zueinander kreisbogenförmig ausgebildet sind,
wobei unter der Brückenplatte (2) zu beiden Enden jeweils eine Tragplatte (18) vorgesehen ist,
durch die die Brückenplatte (2) in Längsrichtung der Brücke (1) beweglich geführt ist,
wobei die Brückenplatte (2) elastisch nachgiebig ausgebildet ist, wobei die Tragplatte (18), die an der Führungsplatte (3) befestigt ist, ein in Längsrichtung der Brücke (1) ausgerichtetes Langloch (19) aufweist,
wobei das Langloch (19) ein Führungsglied (17) in dem Langloch (19) beweglich aufnimmt.

13. Gelenkig miteinander verbundene Fahrzeuge nach Anspruch 12 mit einer Brücke gemäß einem der Ansprüche 2 bis 11.

## Claims

1. Bridge (1) of a transfer between two pivotably interconnected vehicles, wherein the bridge (1) is connectible at each of the ends with the floor of a respective one of the vehicles, wherein a bridge plate (2) is provided, wherein the bridge plate (2) is connected at each of its two ends with respective guide plate (3), wherein the guide plate (3) can be arranged at the vehicle floor, wherein the bridge plate (2) is guided by the guide plate (3)to be movable in a horizontal direction in the installed state, wherein the bridge plate (2) and the guide plate (3) are constructed in the region of the transfer thereof to be arcuate with respect to one another, wherein a respective carrier plate (18), by which the bridge plate is guided to be movable in the longitudinal direction of the bridge (1), is provided below the bridge plate (2) at each of the two ends, wherein the bridge plate (2) is constructed to be resiliently flexible, wherein the carrier plate (18), which is fastened to the guide plate (3), has a slot (19) oriented in the longitudinal direction of the bridge (1) and wherein the slot receives a guide element (17) to be movable in the slot (19).

2. Bridge of a transfer according to claim 1, **characterised in that** the carrier plate (18) can be fastened in stationary position to the vehicle.

3. Bridge of a transfer according to claim 1, **characterised in that** the guide element (17) is constructed as a guide roller.

4. Bridge of a transfer according to any one of the preceding claims, **characterised in that** the bridge (1) has in the region of the bridge plate (2) holding-down devices (15) for connection with the vehicle (7, 8).

5. Bridge of a transfer according to claim 4, **characterised in that** the holding-down devices (15) can be arranged at the vehicle (7, 8).

6. Bridge of a transfer according to any one of the preceding claims, **characterised in that** the guide plate (3) has for guidance of the bridge plate (2) a rail-like receptacle which is substantially U-shaped in cross-section.

7. Bridge of a transfer according to any one of the preceding claims, **characterised in that** the width X of the limb of the rail-shaped receptacle (35) corresponds with the length of the slot (19).

8. Bridge of a transfer according to any one of the preceding claims, **characterised in that** the transfer comprises a bellows (10), wherein the bellows (10) is fastened approximately centrally to the bridge plate (2).

9. Bridge of a transfer according to claim 8, **characterised in that** the bellows (10) comprises a centre frame (11) which at the underside of the bridge plate (2) is fastened approximately centrally thereto.

10. Bridge of a transfer according to claim 9, **characterised in that** the centre frame (11) has centre frame stabilising means (12) in the roof region.

11. Bridge of a transfer according to claim 10, **characterised in that** the centre frame stabilising means (12) is of telescopic construction.

12. Pivotably interconnected vehicles with a transfer between two vehicles, wherein the transfer comprises a bridge (1), wherein the bridge (1) is connected at each of the ends with the floor of a respective one of the vehicles, wherein a bridge plate (2) is provided, wherein the bridge plate (2) is connected at each of its two ends with respective guide plate (3), wherein the guide plate (3) is a component of the vehicle floor, wherein the bridge plate (2) is guided by the guide plate (3) to be movable in a horizontal direction in the installed state, wherein the bridge plate (2) and the guide plate (3) are constructed in the region of the transfer thereof to be arcuate with respect to one another, wherein a respective carrier plate (18), by which the bridge plate is guided to be movable in the longitudinal direction of the bridge (1), is provided below the bridge plate (2) at each of the two ends, wherein the bridge plate (2) is constructed to be resiliently flexible, wherein the carrier plate (18), which is fastened to the guide plate (3), has a slot (19) oriented in the longitudinal direction of the bridge (1) and wherein the slot receives a guide element (17) to be movable in the slot (19).

13. Pivotably interconnected vehicles according to claim 12 with a bridge according to any one of claims 2 to 11.

## Revendications

1. Passerelle (1) d'intercommunication entre deux véhicules reliés l'un à l'autre de façon articulée, dans laquelle la passerelle (1) peut, à chaque extrémité, être reliée au plancher du véhicule correspondant, dans laquelle une plaque de passerelle (2) est prévue, cette plaque de passerelle (2) étant en liaison avec une plaque de guidage (3) à chacune de ses deux extrémités,
dans laquelle la plaque de guidage (3) est solidaire du plancher du véhicule,
dans laquelle la plaque de passerelle (2) est guidée par la plaque de guidage (3) et mobile dans la direction horizontale à l'état monté, dans laquelle la plaque de passerelle (2) et la plaque de guidage (3) sont conformées en arc de cercle dans la région de la transition de l'une à l'autre,
dans laquelle une plaque de support (18) est prévue sous la plaque de passerelle (2), à chacune de ses deux extrémités, par laquelle la plaque de passerelle est guidée mobile dans la direction longitudinale de la passerelle (1),
dans laquelle la plaque de passerelle (2) est constituée de manière à pouvoir céder élastiquement,
dans laquelle la plaque de support (18), qui est fixée à la plaque de guidage (3), comporte un trou oblong (19) orienté dans la direction longitudinale de la passerelle (1), le trou oblong recevant un organe de guidage (17) mobile dans ce trou oblong (19).

2. Passerelle d'intercommunication selon la revendication 1,
**caractérisée en ce que**
la plaque de support (18) peut être fixée au véhicule en une position fixe.

3. Passerelle d'intercommunication selon la revendication 1,
**caractérisée en ce que**
l'organe de guidage (17) est constitué par un galet de guidage.

4. Passerelle d'intercommunication selon l'une des revendications précédentes,
**caractérisée en ce que**
la passerelle (1) comporte, dans la région de la plaque de passerelle (2), des organes de pression (15) servant pour la liaison avec le véhicule (7, 8).

5. Passerelle d'intercommunication selon la revendication 4,
**caractérisée en ce que**
les organes de pression (15) peuvent être solidaires du véhicule (7, 8).

6. Passerelle d'intercommunication selon l'une des revendications précédentes,
**caractérisée en ce que**
la plaque de guidage (3) comporte un logement en forme de coulisse à section transversale en U pour le guidage de la plaque de passerelle (2).

7. Passerelle d'intercommunication selon l'une des revendications précédentes,
**caractérisée en ce que**
la largeur X de la branche du logement en forme de coulisse (35) correspond à la longueur du trou oblong (19).

8. Passerelle d'intercommunication selon l'une des revendications précédentes,
**caractérisée en ce que**
l'intercommunication comprend un soufflet (10), le soufflet (10) étant fixé à la plaque de passerelle (2) à peu près en son milieu.

9. Passerelle d'intercommunication selon la revendication 8,
**caractérisée en ce que**
le soufflet (10) comporte un cadre central (11) qui est fixé au côté inférieur de la plaque de passerelle (2), à peu près en son milieu

10. Passerelle d'intercommunication selon la revendication 9,
**caractérisée en ce que**
le cadre central (11) comporte un stabilisateur de cadre central (12) dans la région du toit.

11. Passerelle d'intercommunication selon la revendication 10,
**caractérisée en ce que**
le stabilisateur du cadre central (12) est de constitution télescopique.

12. Véhicules reliés l'un à l'autre de façon articulée et équipés d'une intercommunication entre deux véhicules, l'intercommunication comportant une passerelle, la passerelle (1) étant reliée à chaque extrémité au plancher du véhicule correspondant, une plaque de passerelle (2) étant prévue,
dans laquelle la plaque de passerelle (2) est en liaison avec une plaque de guidage (3) à chacune de ses extrémités, la plaque de guidage (3) étant une partie constitutive du plancher du véhicule, dans laquelle la plaque de passerelle (2) est guidée par la plaque de guidage (3) de façon mobile dans la direction horizontale à l'état monté, la plaque de passerelle (2) et la plaque de guidage (3) étant configurées en arc de cercle dans la région de transition de l'une à l'autre,
dans laquelle une plaque de support (18) est prévue sous la plaque de passerelle (2) à chacune de ses extrémités, par laquelle la plaque de passerelle (2) est guidée mobile dans la direction longitudinale de la passerelle (1),
dans laquelle la plaque de passerelle (2) est constituée de manière à pouvoir céder élastiquement,
dans laquelle la plaque de support (18), qui est fixée à la plaque de guidage (3), comporte un trou oblong (19) orienté dans la direction longitudinale de la passerelle (1), le trou oblong (19) recevant un organe de guidage (17) mobile dans le trou oblong (19).

13. Véhicules reliés l'un à l'autre de façon articulée selon la revendication 12, comprenant une passerelle selon l'une des revendications 2 à 11.
